# FASCICULE DE BREVET EUROPEEN

(11) **EP 1 507 670 B1**
(45) Date de publication et mention de la délivrance du brevet: **27.07.2011**
(21) Numéro de dépôt: 03729999.7
(22) Date de dépôt: 09.05.2003
(51) Int. Cl.: B60C 9/22

(54) **PNEUMATIQUE POUR DEUX ROUES**
ZWEIRADREIFEN
TWO-WHEELER TYRE

(30) Priorité: 10.05.2002 FR 0205820
(43) Date de publication de la demande: 23.02.2005
(73) Titulaire: Société de Technologie Michelin, 63000 Clermont-Ferrand (FR); Michelin Recherche et Technique S.A., 1763 Granges-Paccot (CH)
(72) Inventeur: CHAYLARD, Yann, F-63100 Clermont-Ferrand (FR)
(74) Mandataire: Le Cam, Stéphane Georges Elie
(86) Numéro de dépôt international: PCT/EP2003/004873
(87) Numéro de publication internationale: WO 2003/095242

(56) Documents cités:
- EP-A- 0 756 949
- EP-A- 0 928 707
- WO-A-98/02320

## Description

La présente invention concerne un pneumatique destiné à équiper un véhicule à deux roues et plus particulièrement une motocyclette.

Comme dans le cas de tous les autres pneumatiques, on assiste à une radialisation des pneumatiques pour motos, l'architecture de tels pneumatiques comprenant une armature de carcasse formée d'une ou deux nappes d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux nappes de sommet d'éléments de renforcement parallèles entre eux dans chaque nappe mais croisés d'une nappe à la suivante en faisant avec la direction circonférentielle des angles aigus, de tels pneumatiques étant plus particulièrement adaptés pour l'avant des motos. Les dites deux nappes de sommet peuvent être surmontées radialement d'au moins une nappe d'éléments circonférentiels, généralement obtenus par enroulement hélicoïdal d'une bandelette d'au moins un élément de renforcement enrobé de caoutchouc. Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Les documents WO-A-98/02320 et EP-A-0 928 707 décrivent des pneumatiques comportant une armature sommet formée d'au moins une couche d'éléments de renforcement circonférentiels répartis sur la direction transversal avec un pas variable tel que ledit pas au centre de la bande de roulement est plus petit qu'au bord e ladite couche, selon le préambule de la revendication 1.

Le document EP 0 456 933, en vue de conférer à un pneumatique pour moto une excellente stabilité à grande vitesse ainsi qu'une excellente propriété de contact avec le sol, enseigne par exemple de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe, la plus proche radialement de la bande de roulement étant composée de câbles enroulés hélicoïdalement dans la direction circonférentielle.

Le brevet US 5 301 730, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

Le brevet EP 565 339 décrit encore un pneumatique pour motocyclette comportant une carcasse radiale surmontée d'une armature sommet constituée d'une nappe dont les éléments de renforcement réalisés à partir de fibres organiques sont enroulés de manière hélicoïdale pour se présenter selon une direction sensiblement circonférentielle. Selon ce document qui concerne des pneumatiques destinés à un usage à haute vitesse, le nombre de fils de renforcement est moins important au centre de la bande de roulement qu'au niveau des épaules. Selon cet enseignement un tel pneumatique permet de contenir la forme du pneumatique à haute vitesse notamment aux épaules tout en autorisant une déformation au centre de la bande de roulement pour améliorer le contact avec le sol.

Le brevet US 5,975,175 décrit des pneumatiques du même type que précédemment comportant des éléments de renforcement métalliques

Il apparaît que des pneumatiques réalisés selon ces différentes techniques peuvent présenter certaines faiblesses. En effet, il apparaît que ces pneumatiques peuvent présenter des défauts d'aspect au niveau des épaules ou dans les flancs dès que le pneumatique est mis à la pression d'utilisation ou après roulage notamment dans le cas d'éléments de renforcement circonférentiels métalliques.

L'invention a pour but de remédier à de tels inconvénients en améliorant notamment la qualité et notamment l'aspect des pneumatiques pour motocyclettes, sans détruire pour autant les autres propriétés, nécessaires à la satisfaction des utilisateurs et plus particulièrement l'aptitude à un usage à haute vitesse.

Ce but a été atteint selon l'invention par un pneumatique pour véhicule motorisé à deux roues selon la revendication 1.

Selon une réalisation préférée de l'invention, les bords de la couche d'éléments de renforcement circonférentiels s'étendent jusqu'aux épaules ou bords du pneumatique.

Le centre ou sommet de la bande de roulement est défini par le plan équatorial du pneumatique.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

Les éléments de renforcement sont des fils de renforcement réalisés en tout matériau connu de l'homme du métier et pouvant avoir subi tout type de traitement tel que des traitements de surface ou enrobage ou préencollage pour améliorer leur adhérence sur le caoutchouc. Les fils peuvent être des monofilaments, des multifilaments, ou des assemblages tels que des câbles, des retors ou tout autre type d'assemblage connus de l'homme du métier.

i. Selon l'invention, la valeur du pas selon la direction transversale obéit à une suite sur au moins une partie de la largeur axiale de ladite couche allant jusqu'aux bords de ladite couche. Selon une telle réalisation, le pas entre les éléments de renforcement circonférentiels de ladite couche est avantageusement constant dans une zone couvrant le sommet de la bande de roulement.

Selon un premier mode de réalisation, la valeur du pas obéit à une suite arithmétique de type U(n) = Uo + nr, avec Uo compris entre 0,4 mm et 2,5 mm, et r, la raison de la suite compris entre 0,001 et 0,1.

Selon un deuxième mode de réalisation, la valeur du pas obéit à une suite géométrique de type U(n) = Uo x rⁿ, avec Uo compris entre 0,4 mm et 2,5 mm, et r, la raison de la suite compris entre 1,001 et 1,025,

Selon d'autres modes de réalisation de l'invention, la valeur du pas peut être une combinaison de plusieurs suites en fonction de la position axiale sur ladite couche, ledit pas au centre de la bande de roulement étant moins important qu'aux bords de ladite couche.

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

Selon des variantes de réalisation de l'invention, la variation du pas entre les éléments de renforcement circonférentiels peut être combinée à une variation du diamètre des éléments de renforcement, ou à la variation selon la direction transversale de propriétés mécaniques des éléments de renforcement et notamment à la variation du module d'élasticité des éléments de renforcement. Ces variations de propriétés mécaniques peuvent être par exemple obtenues par la mise en place d'éléments de renforcement ayant subi des traitements différents, d'éléments de renforcement dont la nature ou le matériau les constituant est différent, ou bien d'éléments de renforcement dont la torsion varie selon la direction transversale.

Le pneumatique selon l'invention est ainsi réalisé contre l'enseignement des techniques connues précitées, en augmentant par exemple la densité d'éléments de renforcement au sommet de la bande de roulement par rapport aux bords, et confère des propriétés pour l'utilisateur tout à fait satisfaisantes, le pneumatique ne présentant par ailleurs pas de défauts d'aspects tels que ceux des pneumatiques évoqués précédemment.

La demanderesse a su mettre en évidence que lors du gonflage à la pression d'utilisation ou ultérieurement lors de l'utilisation des pneumatiques, les éléments de renforcement situés au niveau des épaules peuvent être soumis à des contraintes de compression. Dans le cas des éléments de renforcement métalliques, ces contraintes de compression expliquent les phénomènes de déformation que l'on peut observer au niveau des épaules ou des flancs des pneumatiques de l'art antérieur qui traduisent, selon ces explications, un flambage desdits éléments métalliques. Concernant les éléments de renforcement organiques, ceux-ci étant sensibles à de telles contraintes de compression, il est également souhaitable d'éviter une telle mise en compression de ces éléments.

Par ailleurs, les essais réalisés par la demanderesse montrent que les performances souhaitées pour des usages à haute vitesse sont obtenues de manière semblable à celles des pneumatiques présentés précédemment.

La variation du pas selon une suite arithmétique ou selon une suite géométrique notamment dans les zones allant jusqu'aux bords de la couche d'éléments de renforcement circonférentiels permet notamment une amélioration de la progressivité entre la position ligne droite et la position en courbe, c'est-à-dire en carrossage. Cela se traduit par une meilleure sensation en termes de pilotage. Une telle variation améliore également le confort notamment en courbe.

En outre, la réduction locale de la rigidité circonférentielle obtenue notamment par une réduction locale de la densité d'éléments de renforcement en diminuant le nombre desdits éléments de renforcement, notamment au niveau des épaules, permet des gains en termes de coûts de fabrication ; il est en effet possible de faire des gains par exemple d'une part en termes de quantité de matière utilisée et d'autre part en termes de productivité puisque le temps de pose desdits éléments de renforcement est proportionnel à leur quantité.

Selon une variante de réalisation de l'invention, les éléments de renforcement circonférentiels sont des éléments métalliques. Il apparaît, comme expliqué précédemment, que les pneumatiques réalisés selon l'invention comportant de tels éléments métalliques présentent l'avantage de ne pas faire apparaître de déformation locale au niveau des épaules ou des flancs, notamment lors de la mise à pression d'utilisation. Il semble en effet que la diminution de la rigidité circonférentielle de la couche d'éléments de renforcement circonférentiels permette de diminuer voire d'éliminer les contraintes de compression supportées par lesdits éléments de renforcement.

De plus, il ressort des études que les pneumatiques selon cette variante de réalisation de l'invention conserve une résistance satisfaisante dans ces mêmes zones pour supporter des surpressions ou sous-pressions conduisant à des contraintes de tension dans ces mêmes éléments.

Selon une autre variante de réalisation de l'invention, les éléments de renforcement circonférentiels sont des éléments organiques, tels que des éléments en aramide. Comme expliqué dans le cas des éléments métalliques, les pneumatiques selon l'invention permettent aux éléments de renforcement circonférentiels situés au niveau des épaules de supporter des contraintes de compression moins importantes, voire inexistantes, tout en offrant un renforcement suffisant pour d'éventuelles contraintes d'extension.

Selon une autre variante de réalisation de l'invention, les éléments de renforcement circonférentiels sont des éléments minéraux, tels que des éléments en verre.

Selon d'autres variantes de réalisation de l'invention, les éléments de renforcement circonférentiels sont des éléments composites ou hybrides constitués de matériaux métalliques et/ou minéraux et/ou organiques.

Selon un mode de réalisation de l'invention, le pneumatique comporte une armature de sommet constituée en outre d'au moins une nappe ou couche comportant des éléments de renforcement parallèles entre eux et faisant un angle d'au moins 15° avec la direction longitudinale. Un tel pneumatique confère notamment des propriétés améliorées et plus particulièrement la stabilité à grande vitesse.

Selon un mode de réalisation préférée de l'invention, l'armature de sommet est constituée d'au moins deux nappes ou couches comportant des éléments de renforcement parallèles entre eux et croisés d'une nappe ou couche à la suivante. Un pneumatique ainsi réalisé est particulièrement avantageux pour un usage à grande vitesse.

Selon l'un ou l'autre de ces modes de réalisation, la position relative entre la couche comportant les éléments de renforcement circonférentiels et la ou les nappes ou couches comportant des éléments de renforcement parallèles entre eux et croisés d'une nappe ou couche à la suivante peut être définie en fonction des propriétés recherchées ; la nappe ou couche d'éléments de renforcement circonférentiels peut être placée soit sous cette ou ces nappes, soit sur cette ou ces nappes, soit encore entre deux de ces nappes lorsque l'armature de sommet comporte au moins deux de ces nappes.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique selon l'invention,
- figure 2, une représentation schématique d'un empilement d'éléments de renforcement selon une première réalisation de l'invention,
- figure 3, une représentation schématique d'un empilement d'éléments de renforcement selon une seconde réalisation de l'invention,

Les figures ne sont pas représentées à l'échelle pour en simplifier la compréhension.

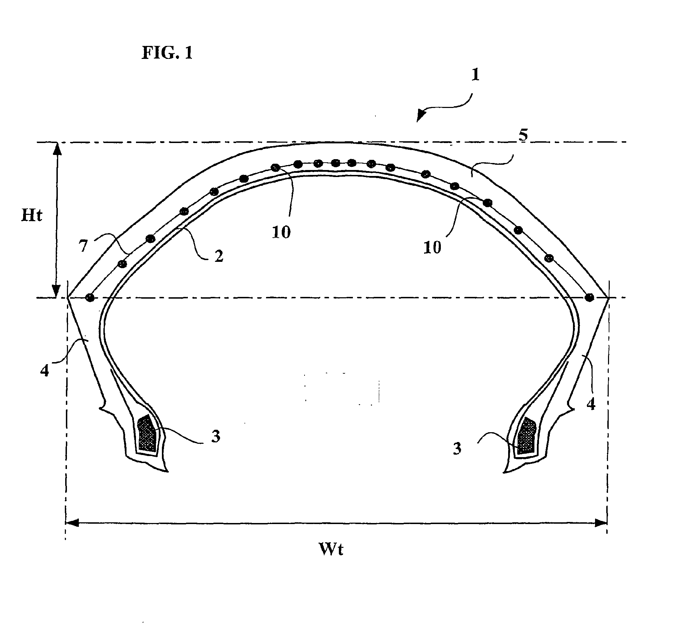

La figure 1 représente un pneumatique 1 de dimension 180/55zr17. Ce pneumatique 1 comprend une armature de carcasse constituée d'une seule nappe 2 comprenant des éléments de renforcement de type textile. La nappe 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°. Ladite nappe 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.3 et 0.5 pour un pneumatique destiné à être monté à l'avant d'une motocyclette et elle sera avantageusement comprise entre 0.2 et 0.5 pour un pneumatique destiné à être monté à l'arrière.

Entre la carcasse et la bande de roulement est mise en place une armature de sommet constituée d'au moins une couche 7 comprenant des éléments de renforcement 10 orientés selon la direction circonférentielle ou longitudinale et donc présentant un angle avec cette direction longitudinale de 0° ou proche de 0°. Cette couche s'étend sur au moins une partie de la zone correspondant à la bande de roulement et avantageusement sur toute la surface correspondant à la bande de roulement. Selon l'invention le pas entre les éléments de renforcement circonférentiels varie sur une partie de la couche d'éléments de renforcement circonférentiels selon la direction transversale ou axiale conformément à l'invention de sorte que ledit pas soit plus petit au sommet du pneumatique qu'au bord de la couche d'éléments de renforcement circonférentiels. Selon cette réalisation, le pas est constant depuis le sommet sur une largeur axiale de 60 mm en direction de chacun des bords de la bande de roulement et égal à 0,85 mm, puis varie selon une suite arithmétique avec Uo égal à 0,85 mm et une raison égale à 0,025 sur une largeur axiale s'étendant jusqu'à 110 mm depuis le sommet du pneumatique.

Les éléments de renforcement circonférentiels présentent un module d'élasticité de préférence supérieur à 6000 N/mm². Les éléments circonférentiels sont par exemple métalliques ou en aramide ou en verre.

Les éléments de renforcement métalliques utilisés sont des renforts en acier de type 4.23 non fretté de diamètre 0,55 mm. Dans le cas d'éléments de renforcement en aramide on utilise par exemple des éléments de type 167x2-350/350.

Ils sont mis en place avec un pas de pose variable selon la direction axiale du pneumatique.

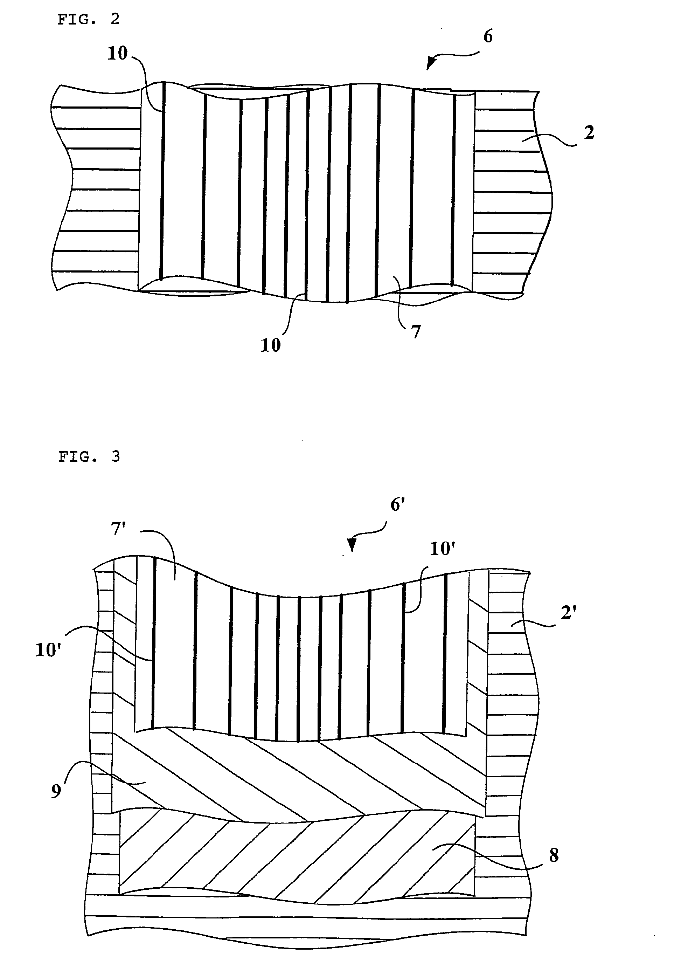

Sur la figure 2 est illustré le cas d'une armature de sommet 6 correspondant au cas de la figure 1 et ne comportant qu'une couche 7 d'éléments de renforcement circonférentiels 10. Selon une réalisation avantageuse de l'invention les éléments de renforcements sont constitués d'un fil unitaire. Un tel pneumatique est plus particulièrement destiné à équiper la roue arrière d'une motocyclette.

La figure 3 illustre le cas d'une armature de sommet 6' constituée de trois nappes ou couches d'éléments de renforcement ; en s'éloignant radialement vers l'extérieur, la nappe carcasse 2' est recouverte de deux nappes 8, 9 de sommet de travail constituées d'éléments de renforcement parallèles entre eux et croisés d'une nappe à l'autre. Les nappes de sommet de travail sont radialement recouvertes d'une couche 7' comportant les éléments de renforcement circonférentiels 10'. La disposition et mise en place de ces éléments circonférentiels 10' peuvent être identiques au cas de la figure 2. Un pneumatique tel que celui de la figure 3 pourra équiper les roues avant et/ou arrière d'une motocyclette.

Selon l'une ou l'autre de ces réalisations d'un pneumatique selon l'invention, la couche comportant les éléments de renforcement circonférentiels est réalisée selon l'invention telle que lesdits éléments de renforcement sont répartis selon la direction transversale avec un pas variable, de sorte que la densité d'éléments au centre ou sommet de la bande de roulement est plus importante qu'aux bords de ladite couche d'éléments de renforcement circonférentiels. Selon ces réalisations, on obtient donc une variation de la rigidité circonférentielle selon la direction transversale de la couche d'éléments de renforcement circonférentiels telle que la rigidité circonférentielle de ladite couche au centre ou sommet de la bande de roulement est plus importante qu'aux bords de ladite couche.

Cette couche de renforcement circonférentiel conforme à l'invention permet de réaliser des pneumatiques dont la qualité et notamment l'aspect est améliorée par rapport aux pneumatiques usuels présentés précédemment. Ces pneumatiques permettent en outre de conserver les propriétés souhaitées notamment pour des usages à haute vitesse.

## Revendications

1. Pneumatique (1) pour véhicule motorisé à deux roues comportant au moins une structure de renfort de type carcasse (2, 2'), formée d'éléments de renforcement faisant avec la direction circonférentielle un angle compris entre 65° et 90°, ancrée de chaque côté du pneumatique à un bourrelet (3) dont la base est destinée à être montée sur un siège de jante, chaque bourrelet se prolongeant radialement vers l'extérieur par un flanc (4), les flancs rejoignant radialement vers l'extérieur une bande de roulement (5) dont le rapport Ht/Wt est supérieur à 0.15, ladite armature de carcasse (2, 2') étant radialement surmontée, au moins dans la zone de la bande de roulement, d'une armature de sommet (6, 6') formée d'au moins une couche (7, 7') d'éléments de renforcement circonférentiels (10, 10') lesdits éléments de renforcement circonférentiels (10, 10') étant répartis selon la direction transversale avec un pas variable, ledit pas au centre de la bande de roulement étant moins important qu'aux bords de ladite couche **caractérisé en ce que** sur au moins une partie de la largeur axiale de ladite couche, la valeur du pas selon la direction transversale obéit à une suite arithmétique de type U(n) = Uo + nr, avec Uo compris entre 0,4 mm et 2,5 mm, et r, la raison de la suite compris entre 0,001 et 0,1 ou à une suite géométrique de type U(n) = Uo x rⁿ, avec Uo compris entre 0,4 mm et 2,5 mm, et r, la raison de la suite compris entre 1,001 et 1,025.

2. Pneumatique (1) pour véhicule motorisé à deux roues selon la revendication 1, **caractérisé en ce que** la couche (7, 7') d'éléments de renforcement ciconférentiels (10, 10') s'étend jusqu'aux épaules du pneumatique.

3. Pneumatique (1) pour véhicule motorisé à deux roues selon l'une des revendications 1 ou 2, **caractérisé en ce que** le diamètre des éléments de renforcement (10, 10') varie selon la direction transversale.

4. Pneumatique (1) pour véhicule motorisé à deux roues selon l'une des revendications 1 à 3, **caractérisé en ce que** les propriétés mécaniques des éléments de renforcement (10, 10') varient selon la direction transversale.

5. Pneumatique (1) pour véhicule motorisé à deux roues selon l'une des revendications 1 à 4, **caractérisé en ce que** les éléments de renforcement circonférentiels (10, 10') présentent un module d'élasticité supérieur à 6000 N/mm².

6. Pneumatique (1) pour véhicule motorisé à deux roues selon l'une des revendications 1 à 5, **caractérisé en ce que** les éléments de renforcement circonférentiels (10, 10') sont en acier.

7. Pneumatique (1) pour véhicule motorisé à deux roues selon l'une des revendications 1 à 5, **caractérisé en ce que** les éléments de renforcement circonférentiels (10, 10') sont en aramide.

8. Pneumatique (1) pour véhicule motorisé à deux roues selon l'une des revendications 1 à 5, **caractérisé en ce que** les éléments de renforcement circonférentiels (10, 10') sont en verre.

9. Pneumatique (1) pour véhicule motorisé à deux roues selon l'une des revendications 1 à 8, **caractérisé en ce que** l'armature de sommet (6') est constituée d'au moins une nappe ou couche (8, 9) comportant des éléments de renforcement parallèles entre eux et faisant un angle d'au moins 15° avec la direction longitudinale.

10. Pneumatique (1) pour véhicule motorisé à deux roues selon la revendication 9, **caractérisé en ce que** l'armature de sommet (6') est constituée d'au moins deux nappes ou couches (8, 9) comportant des éléments de renforcement parallèles entre eux et croisés d'une nappe ou couche à la suivante.

## Claims

1. A tyre (1) for a two-wheeled motorised vehicle comprising at least one carcass-type reinforcement structure (2, 2'), formed of reinforcement elements forming with the circumferential direction an angle of between 65° and 90°, anchored on either side of the tyre to a bead (3) whose base is intended to be fitted on a rim seat, each bead being extended radially towards the outside by a sidewall (4), the sidewalls meeting up, radially towards the outside, with a tread (5) whose Ht/Wt ratio is greater than 0.15, said carcass reinforcement (2, 2') being radially surmounted at least in the zone of the tread by a crown reinforcement (6, 6') formed of at least one layer (7, 7') of circumferential reinforcement elements (10, 10'), said circumferential reinforcement elements (10, 10') being distributed in the transverse direction with a variable pitch, said pitch being smaller at the centre of the tread than at the edges of said layer, **characterised in that**, on at least a part of the axial width of said layer, the value of the pitch in the transverse direction follows an arithmetic progression of the type U(n) = Uo + nr, with Uo being between 0.4 mm and 2.5 mm and r being the difference of consecutive terms of the progression, said difference being between 0.001 and 0.1 or a geometric progression of the type U(n) = Uo x rⁿ, with Uo being between 0.4 mm and 2.5 mm and r being the difference of consecutive terms of the progression, said difference being between 1.001 and 1.025.

2. A tyre (1) for a two-wheeled motorised vehicle according to claim 1, **characterised in that** the layer (7, 7') of circumferential reinforcement elements (10, 10') extends as far as the shoulders of the tyre.

3. A tyre (1) for a two-wheeled motorised vehicle according to one of claims 1 or 2, **characterised in that** the diameter of the reinforcement elements (10, 10') varies in the transverse direction.

4. A tyre (1) for a two-wheeled motorised vehicle according to one of claims 1 to 3, **characterised in that** the mechanical properties of the reinforcement elements (10, 10') vary in the transverse direction.

5. A tyre (1) for a two-wheeled motorised vehicle according to one of claims 1 to 4, **characterised in that** the circumferential reinforcement elements (10, 10') exhibit a modulus of elasticity greater than 6000 N/mm².

6. A tyre (1) for a two-wheeled motorised vehicle according to one of claims 1 to 5, **characterised in that** the circumferential reinforcement elements (10, 10') are of steel.

7. A tyre (1) for a two-wheeled motorised vehicle according to one of claims 1 to 5, **characterised in that** the circumferential reinforcement elements (10, 10') are of aramid.

8. A tyre (1) for a two-wheeled motorised vehicle according to one of claims 1 to 5, **characterised in that** the circumferential reinforcement elements (10, 10') are of glass.

9. A tyre (1) for a two-wheeled motorised vehicle according to one of claims 1 to 8, **characterised in that** the crown reinforcement (6') consists of at least one ply or layer (8, 9) comprising reinforcement elements parallel to one another and forming an angle of at least 15° with the longitudinal direction.

10. A tyre (1) for a two-wheeled motorised vehicle according to claim 9, **characterised in that** the crown reinforcement (6') consists of at least two plies or layers (8, 9) comprising reinforcement elements parallel to one another and crossed from one ply or layer to the next.

## Patentansprüche

1. Luftreifen (1) für ein zweirädriges Motorfahrzeug, der mindestens eine Verstärkungsstruktur vom Typ Karkasse (2, 2') aufweist, die von Verstärkungselementen gebildet wird, welche mit der Umfangsrichtung einen Winkel zwischen 65° und 90° bilden, die auf jeder Seite des Luftreifens an einem Wulst (3) verankert ist, dessen Basis dazu bestimmt ist, auf einen Felgensitz montiert zu werden, wobei jeder Wulst sich radial nach außen durch eine Flanke (4) verlängert, wobei die Flanken radial nach außen an einen Laufstreifen (5) anschließen, dessen Verhältnis Ht/Wt höher ist als 0,15, wobei radial über der Karkassenbewehrung (2, 2') zumindest im Bereich des Laufstreifens eine Scheitelbewehrung (6, 6') liegt, die von mindestens einer Schicht (7, 7') von Umfangsverstärkungselementen (10, 10') gebildet wird, wobei die Umfangsverstärkungselemente (10, 10') in Querrichtung mit einem variablen Abstand verteilt sind, wobei der Abstand in der Mitte des Laufstreifens weniger groß ist als an den Rändern der Schicht, **dadurch gekennzeichnet, dass** in mindestens einem Teil der axialen Breite der Schicht der Wert des Abstands in Querrichtung einer arithmetischen Folge des Typs U(n) = Uo + nr genügt, mit Uo zwischen 0,4 mm und 2,5 mm und r dem Verhältnis der Folge zwischen 0,001 und 0,1, oder einer geometrischen Folge des Typs U (n) = Uo x rⁿ genügt, mit Uo zwischen 0,4 mm und 2,5 mm und r dem Verhältnis der Folge zwischen 1,001 und 1,025.

2. Luftreifen (1) für ein zweirädriges Motorfahrzeug nach Anspruch 1, **dadurch gekennzeichnet, dass** die Schicht (7, 7') von Umfangsverstärkungselementen (10, 10') sich bis zu den Schultern des Luftreifens erstreckt.

3. Luftreifen (1) für ein zweirädriges Motorfahrzeug nach einem der Ansprüche 1 oder 2, **dadurch gekennzeichnet, dass** der Durchmesser der Verstärkungselemente (10, 10') gemäß der Querrichtung variiert.

4. Luftreifen (1) für ein zweirädriges Motorfahrzeug nach einem der Ansprüche 1 bis 3, **dadurch gekennzeichnet, dass** die mechanischen Eigenschaften der Verstärkungselemente (10, 10') gemäß der Querrichtung variieren.

5. Luftreifen (1) für ein zweirädriges Motorfahrzeug nach einem der Ansprüche 1 bis 4, **dadurch gekennzeichnet, dass** die Umfangsverstärkungselemente (10, 10') einen Elastizitätsmodul höher als 6000 N/mm² haben.

6. Luftreifen (1) für ein zweirädriges Motorfahrzeug nach einem der Ansprüche 1 bis 5, **dadurch gekennzeichnet, dass** die Umfangsverstärkungselemente (10, 10') aus Stahl sind.

7. Luftreifen (1) für ein zweirädriges Motorfahrzeug nach einem der Ansprüche 1 bis 5, **dadurch gekennzeichnet, dass** die Umfangsverstärkungselemente (10, 10') aus Aramid sind.

8. Luftreifen (1) für ein zweirädriges Motorfahrzeug nach einem der Ansprüche 1 bis 5, **dadurch gekennzeichnet, dass** die Umfangsverstärkungselemente (10, 10') aus Glas sind.

9. Luftreifen (1) für ein zweirädriges Motorfahrzeug nach einem der Ansprüche 1 bis 8, **dadurch gekennzeichnet, dass** die Scheitelbewehrung (6') aus mindestens einer Lage oder Schicht (8, 9) besteht, die Verstärkungselemente aufweist, welche parallel zueinander sind und einen Winkel von mindestens 15° mit der Längsrichtung bilden.

10. Luftreifen (1) für ein zweirädriges Motorfahrzeug nach Anspruch 9, **dadurch gekennzeichnet, dass** die Scheitelbewehrung (6') aus mindestens zwei Lagen oder Schichten (8, 9) besteht, die Verstärkungselemente aufweisen, welche parallel zueinander sind und sich von einer Lage oder Schicht zur nächsten kreuzen.
